# EUROPEAN PATENT SPECIFICATION

(11) **EP 0 657 243 B1**
(45) Date of publication and mention of the grant of the patent: **30.07.1997**
(21) Application number: 94918534.2
(22) Date of filing: 16.06.1994
(51) Int. Cl.: B23H 7/02, B23H 1/10, B23H 7/10

(54) **ELECTRIC DISCHARGE MACHINING DEVICE**
ELECTRISCHE ENTLADUNGSBEARBEITUNGSVORRICHTUNG
DISPOSITIF D'USINAGE PAR ETINCELAGE

(30) Priority: 16.06.1993 JP 181825/93
(43) Date of publication of application: 14.06.1995
(73) Proprietor: SODICK CO., LTD., Yokohama-shi, Kanagawa 222 (JP)
(72) Inventor: FUJITA, Ichiro, Kaga-shi, Ishikawa 922-05 (JP)
(74) Representative: Kensett, John Hinton
(86) International application number: PCT/JP94/00979
(87) International publication number: WO 94/29059

(56) References cited:
- JP-A- 4 159 023
- JP-A-56 119 327
- JP-A-63 196 323
- JP-B- 5 013 767

## Description

### Technical Field

The present invention relates to an electric discharge machining ("EDM") apparatus. More specifically, the present invention relates to an electric discharge machining apparatus which uses powder-containing dielectric fluid and powder-free dielectric fluid.

### Background Technology

In general, an EDM apparatus is classified into two types, a die-sinking EDM and a wire-cut EDM. A die-sinking EDM includes a three-dimensional shaped tool electrode to induce electric discharges across a gap formed between the workpiece being machined and the tool electrode by applying a voltage across the gap while filling the gap with dielectric fluid such as, kerosine or solution having a high molecular compound.

On the other hand, a wire-cut EDM includes a wire made from such material as brass or tungsten having 0.02 to 0.03 millimeters in diameter as a tool electrode. During electric discharge machining, the wire, which travels between a pair of wire guides, is positioned opposite to a workpiece to machine the workpiece. In general, deionized water or kerosene based fluid is used as dielectric fluid which is filled in the gap formed between the travelling wire and the workpiece.

It is well-known that during finish-machining a sort of dielectric fluid, which mixes with fine powder such as polycrystalline silicon, is used to improve surface roughness of the workpiece being machined and increase machining stability. British Patent No. 828,336 and U.S. Patent Nos. 4,392,042 and 4,952,768 disclose the use of this sort of fluid.

When this sort of fluid is used in a wire-cut EDM, the powder may go into the rotating parts in a work tank, for example, into rollers, which are provided along a wire transport path, and reach the bearings of the rollers, affecting the transportation of wire, which in turn may result in an undesired effect on the machining.

Further, if the powder enters a wire guide assembly, which contains moveable wire guides and moveable current pickups for delivering current to a wire, it may impede the movements of the wire guides and the current pickups. In addition, it is troublesome to remove the powder that is remaining in the wire transport mechanism and the wire guide assembly after the machining operation is finished.

An object of the present invention is to provide an electric discharge machining apparatus for preventing powder-containing fluid from adhering to the necessary parts in the work tank.

Another object of the present invention is to provide an electric discharge machining apparatus in which the work of removing the powder adhering to the parts in the work tank after the machining operation is finished, is reduced.

Additional objects, advantages and novel features of the invention will be set forth in part in the description which follows, and in part will become apparent to those skilled in the art upon examination of the following, or may be learned by practice of the invention. The objects and advantages of the invention may be realized and attained by means of the instrumentalities and combinations particularly pointed out in the appended claims.

According to the present invention there is provided an electric discharge machining apparatus using a tool electrode for machining a workpiece by means of electric discharges by applying voltage across a machining gap formed between the tool electrode and the workpiece and filled with dielectric fluid, characterised by; a storage tank for storing a first fluid; a covering means, covering a member to be protected against said first fluid; and a fluid supply device for introducing a second fluid to the inside of said covering means while supplying said first fluid to the machining gap.

In preferred embodiments of the invention, the first fluid contains a powdery substance, whilst the second fluid does not contain the powdery substance.

Embodiments of the invention will now be described, by way of example only, in which:
FIG. 1 is a schematic diagram illustrating an embodiment of an electric discharge machining apparatus of the present invention.
FIG. 2 is a cross-sectional view illustrating one example of an upper assembly shown in FIG. 1.
FIG. 3 is a cross-sectional view illustrating another example of an upper guide assembly.
FIG. 4 is a schematic diagram illustrating a wire take-up device.
FIG. 5 is a cross-sectional view illustrating an example of a wire take-up device shown in FIG. 4 taken on line C-C.
FIG. 6 is a cross-sectional view illustrating another example of a wire take-up device.
FIG. 7 is a cross-sectional view illustrating yet another example of a wire take-up device.

### Best Mode of Embodying the Invention

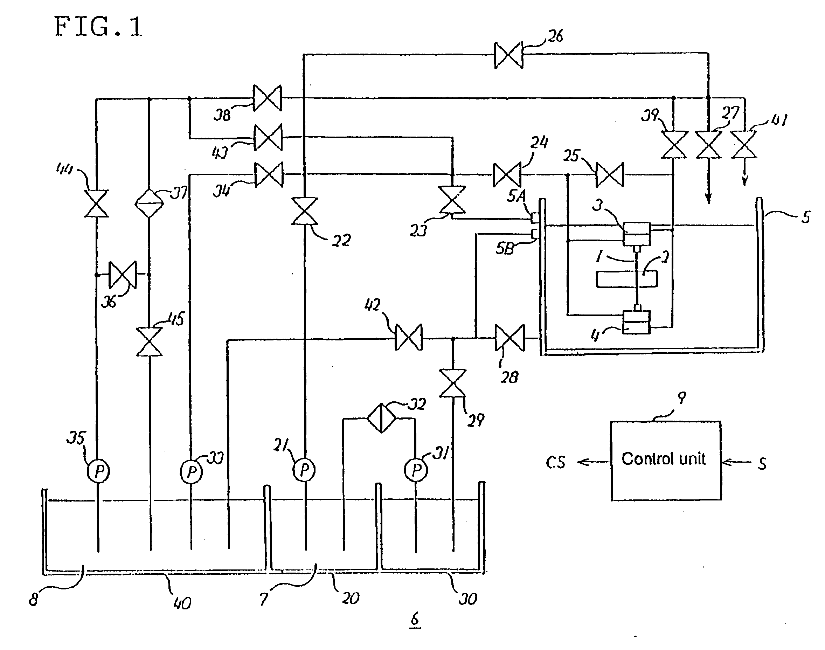

FIG. 1 shows an embodiment of a wire-cut electric discharge machining apparatus. In the apparatus, a wire electrode 1 is continuously fed from a wire feeding device (not illustrated) and is guided by a pair of wire guides, described later, to a machining gap formed between the wire 1 and a workpiece 2 which is disposed in a work tank 5. In the illustrated embodiment, each of the pair of wire guides are positioned above and below the workpiece 2 and contained in guide assemblies 3 and 4, respectively. During electric discharge machining, voltage pulse are intermittently supplied from a power supply device (not illustrated) to the machining gap to induce electric discharges across the gap, which result in the machining of the workpiece 2.

In the illustrated embodiment, a dielectric fluid supply device 6 is provided for selectively supplying an oil-based, powder-free dielectric fluid 7 and oil-based, powder-containing dielectric fluid 8 to the machining gap. The dielectric fluid supply device 6 includes a tank 20 for reserving the powder-free fluid 7, a tank 30 for reserving powder-free fluid 7 used in the machining and discharged from the work tank 5, a tank 40 for reserving the powder-containing fluid 8. Preferably, the powder-free fluid 7 is used for roughing and the powder-containing fluid 8 for finish-machining.

With reference to FIG. 1, a supply path of dielectric fluid 7 will now be described. When preparing for machining, the dielectric fluid 7 in the tank 20 is fed to the work tank 5 via solenoid valves 22 and 23 through an inlet 5A by actuating a pump 21 to fill the work tank 5. During machining, by actuating a pump 21, the dielectric fluid 7 in the tank 20 is fed, via solenoid valves 22 and 24, to respective nozzles of guide assemblies 3 and 4, from which the fluid 7 is flushed toward the machining gap. Preferably, an automatic wire threader is provided for automatically threading the wire 1 into the machining gap in the workpiece 2 and stringing the wire 1 between the pair of wire guides when preparing for machining or when the wire 1 brakes. For example, Japanese Patent Application Laid-Open No. 62-130129 discloses an automatic wire threader in which a wire is introduced into a vertically moveable pipe and then threaded into the machining gap and a lower wire guide by means of a jet flow by feeding fluid into the pipe under pressure. In the embodiment of the present invention, the fluid 7 in the tank 20 is fed to an automatic wire threader via solenoid valves 22 and 27 by actuating the pump 21 to create the necessary jet flow. An overflow outlet 5B is provided on the work tank 5 for draining any overflow fluid for maintaining fluid of the work tank 5 at a predetermined level. The overflow is sent to the tank 30 via a solenoid valve 29. When the machining is finished, the dielectric fluid 7 in the work tank 5 is sent to the tank 30 via solenoid valves 28 and 29. The fluid 7 in the tank 30 is returned to the tank 20 via a filter 32, which is provided for removing chips produced during machining, by actuating a pump 31.

Next, a supply path of dielectric fluid 8 will now be described. When preparing for machining, the dielectric fluid 8 in the tank 40 is fed to the work tank 5 via solenoid valves 34 and 23 through the inlet 5A by actuating a pump 33 to fill the work tank 5. During machining, by actuating a pump 33 and closing a valve 25, the dielectric fluid 8 in the tank 40 is routed, via solenoid valves 34 and 24, to respective nozzles of the guide assemblies 3 and 4, from which the fluid 8 is flushed toward the machining gap.

In addition, powder-free fluid is supplied to parts of the guide assemblies, where moveable elements, such as wire guides or current pickups are disposed, to prevent the ingress of the powder into the parts. The fluid 7 may be used for preventing the ingress of the powder. It is preferred to use fluid made free of powder by filtering the dielectric fluid 8. In the illustrated embodiment, a backwashing filter 37 is provided for removing the powder from the fluid 8. The fluid 8 is routed to the guide assemblies 3 and 4, respectively, via a solenoid valve 36, the backwashing filter 37 and solenoid valves 38 and 39 by actuating a pump 35 while closing the valve 25. Further, the fluid 8 is routed, via the solenoid valve 36, the backwashing filter 37 and solenoid valves 38 and 41, to rotating parts in the work tank 5, such as bearings in rollers, which are provided along a wire transport path, to prevent the ingress of the powder into the rotating parts. Preferably, the fluid 8 is additionally routed to the automatic wire threader via the solenoid valve 36, the backwashing filter 37 and the solenoid valves 38 and 27 during the automatic wire threading operation, by actuating the pump 35. Any overflow fluid of the work tank 5 is sent from the outlet 5B to the tank 40 via a solenoid valve 42. After the machining is finished, the dielectric fluid 8 in the work tank 5 is returned to the tank 40 via the solenoid valves 28 and 42.

As the dielectric fluid 8 is used only for finish-machining, the quantity of chips produced by electric discharge machining is relatively small. A filtering device such as, a centrifugal filter or a magnet filter may be provided in the tank 40 for removing those chips. In addition, a density controlling device having a density detector may be provided for controlling the density of the powder in the fluid 8. An agitator may also be provided for prevented the settling of powder.

When the machining is over, the fluid 8 will be remaining at the bottom of the work tank 5 and in the guide assemblies 3 and 4 or will be adhering to the work stand, which supports the workpiece 2, and some jigs. After the fluid has evaporated, the powder will adhere firmly to some members in the work tank 5 and will be difficult to remove. It is preferred that the fluid 8 is routed into the work tank 5 via the solenoid valve 36, the backwashing filter 37, solenoid valves 43 and 23 and the inlet 5A by actuating the pump 35 so as to wash off the powder-containing residual fluid in the work tank 5. In addition, when necessary, the fluid 8 may be routed to respective nozzle parts of the guide assemblies 3 and 4 via the solenoid valve 36, the backwashing filter 37 and the solenoid valves 38 and 39 to remove any powder remaining in those nozzles. The fluid 8 used for the above cleaning process is drained from the work tank 5 and returned to the tank 40 via the solenoid valves 28 and 42.

In order to return the powder, which was captured with the backwashing filter 37, to the tank 40, the fluid 8 in the tank 40 is circulated via a solenoid valve 44, the backwashing filter 37 and a solenoid valve 45 by actuating the pump 35 for a predetermined time period while closing valves 36, 38 and 43.

As described in the foregoing, in the present invention, the fluid 8, not the fluid 7, is routed to the work tank 5 via the backwashing filter 37 to prevent the ingress of the powder into moveable parts or slidable parts or to remove the powder remaining in the work tank 5 after the machining with the fluid 8 is finished. Therefore, the density of powder in the tank 40 is maintained at a constant value after the powder, which has been captured with the backwashing filter 37, is recovered. And it is easy to control the density of powder. Also, the fluid 8 sent from the tank 40 and the powder remaining in the work tank 5 are finally returned to the tank 40 so there is no loss of precious powder.

Further, a control unit 9 is provided on the wire-cut electric discharge machining apparatus of the embodiment for controlling any solenoid valves and pumps illustrated in FIG. 1. The control unit 9 responsive, for example, to a signal S representative of the operating state of the machine body, determines the operating sequence of the solenoid valves and pumps using a microcomputer and generates a control signal CS. Or, the control unit 9 may read commands input manually by an operator or commands from a progran to generate the control signal CS.

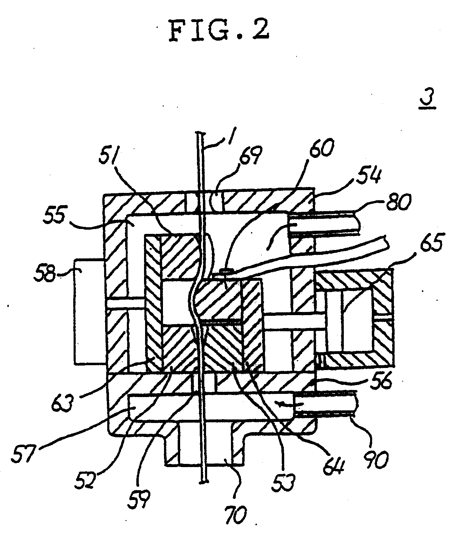

With reference to FIG. 2, an upper guide assembly 3 of FIG. 1 will now be described. The upper guide assembly 3 includes a nozzle housing 56. The nozzle housing 56 forms a chamber 57 therein and includes a nozzle 70, which is positioned opposite to the workpiece 2. An opening 59 is formed on the nozzle housing 56 to thread the wire 1. The hole has a diameter that permits a pipe (not illustrated) to pass through it in the automatic wire threading process. During machining, dielectric fluid is introduced into the chamber 57 from an inlet 90 and flushed toward the machining gap from the nozzle 70.

The guide assembly 3 further includes a guide housing 54, which is provided on the top of the nozzle housing 56. The guide housing 54 forms a chamber 55 therein. The chamber 55 houses a current pickup 60 for delivering current, which is fed from the power supply through an appropriate feeder cable, to the wire 1. The current pickup 60 is attached to a moveable member 64, which is moveable by means of an actuator 65, so as to pushingly come into contact with and move away from the wire 1.

The chamber 55 further houses a wire guide 51 and wire guides 52 and 53, which are, respectively, positioned above and below the current pickup 60. Each of the wire guides 51, 52 and 53 have a V-shaped groove. The upper wire guide 51 is attached to a moveable member 63, which is moveable by means of an actuator 58, so as to come into contact with and move away from the wire 1. The lower wire guides 52 and 53 are, respectively, attached to the moveable members 63 and 64. During machining, guides 52 and 53 are positioned into an abutted relationship by means of the actuators 58 and 65 to form a guide hole in the fluid communication with the opening 59. The guide hole, which is slightly larger in diameter than the wire 1, defines the position of the wire 1 relative to the workpiece 2. In the automatic wire threading process, the current pickup 60 and guides 51, 52 and 53 are moved away from the wire 1 by means of the actuators 58 and 65.

In order to prevent powder-containing fluid from entering the chamber 55 through a die guide 69, which is provided on the guide housing 54, and through the opening 59, powder-free fluid is introduced into the chamber 55 from an inlet 80. This ensures the smooth movement of the moveable members 63 and 64, which results in the accurate positioning of the wire 1 defined by the contacting of guides 52 and 53. Also, cleaning after the machining is not necessary since powder-containing fluid will not remain in such a confined space as the V-shaped groove of the wire guides. It is preferred that the pressure of the fluid, that is introduced from the inlet 80, should be controlled to the same value as or slightly higher than the pressure of the fluid introduced from the inlet 90.

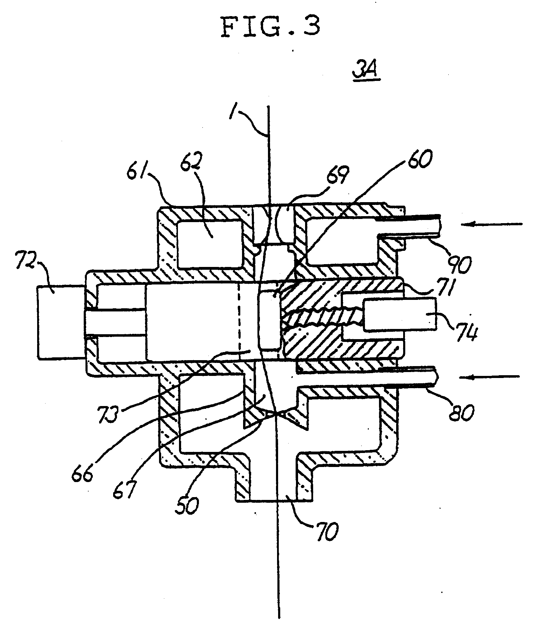

With reference to FIG. 3, another embodiment of the upper guide assembly will now be described. An upper guide assembly 3A includes a nozzle housing 61. The nozzle housing 61 forms a chamber 62 therein and includes a nozzle 70, which is positioned opposite to the workpiece 2. During machining, dielectric fluid is introduced into the chamber 62 from an inlet 90 and flushed toward the machining gap from the nozzle 70.

The guide assembly 3A further includes a guide housing 66, which is provided on the inside of the nozzle housing 61. The guide housing 66 forms a chamber 67 therein and houses a moveable member 71. The moveable member 71 can be moved in a direction orthogonal to the axis of the travelling wire 1 by means of an actuator 72. The moveable member 71 has a hole 73 therein to allow the wire 1 to be threaded through it. A flat-shaped current pickup 60 is attached to the moveable member 71 by means of a set screw 74 so as to pushingly come into contact with and move away from the wire 1. The current pickup 60 can slide in a direction orthogonal to the axis of the travelling wire 1 and orthogonal to the axis of movement of the moveable member 71 by loosening the set screw 74, so as to change the site of contact with the travelling wire 1.

Further, a wire guide 50 is formed on the guide housing 66 in close vicinity of the nozzle 70 to define the position of the wire 1 relative to the workpiece 2. In order to prevent powder-containing fluid from entering the chamber 67 through a die guide 69, which is provided on the guide housing 66, and through the wire guide 50, powder-free fluid is introduced into the chamber 67 from an inlet 80. This surely enables the moveable members 71 to smoothly move and the current pickup 60 to smoothly slide. Also, cleaning after the machining is not necessary since powder-containing fluid will not remain in such a confined space as the wire guide 50. As mentioned above, preferably, the pressure of the fluid, that is introduced from the inlet 80, is controlled to the same value as or slightly higher than the pressure of the fluid introduced from the inlet 90.

The invention may be adapted for use with a wire-cut electric discharge machining apparatus in which moveable members are used in the work tank 5 in a wire take-up mechanism which is provided for transporting the used wire to an appropriate wire discharge part.

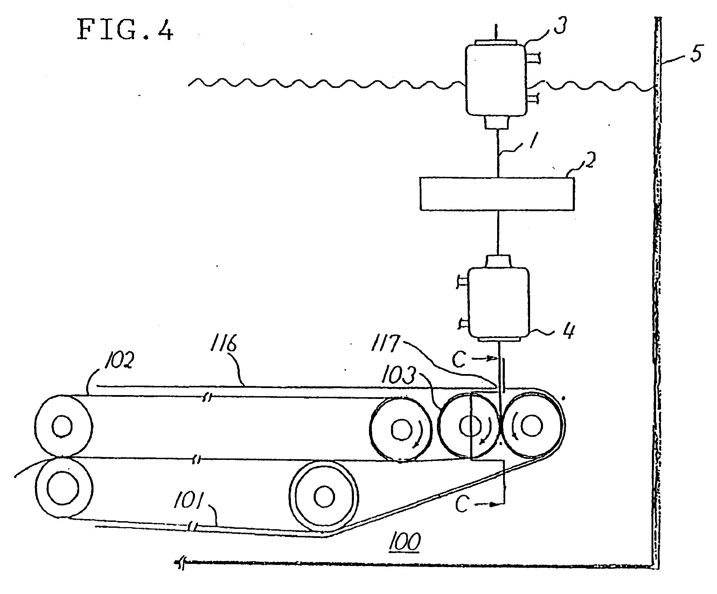

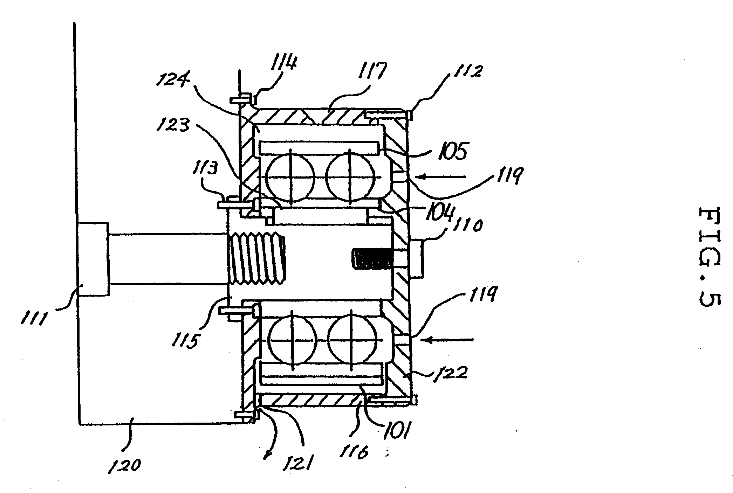

With reference to FIGS. 4 and 5, a wire take-up device 100 for transporting the used wire 1, which is sent out from the lower guide assembly 4 supported on a lower arm 120, to an appropriate wire discharge part, will now be described.

The wire take-up device 100 includes wire conveyor belts 101 and 102 and a number of rollers 103. These rollers 103 are attached on the arm 120 which supports the lower guide assembly 4. Further, a case 116, which encloses those belts and rollers, is fixed to the arm 120 by means of bolts 113 and 114.

As best seen in FIG. 5, the roller 103 includes a roller shaft 115, an inner ring 104 and an outer ring 105. The roller shaft 115 is fixed to the arm 120 by means of bolt 111. The inner ring 104 is provided on the outside of the roller shaft 115 by means of a key 123. The outer ring 105 is provided on the outside of the inner ring 104 by means of a number of rolling elements.

In addition, a cover 122 is attached to the roller shaft 115 by means of a bolt 110 and also to the case 116 by means of a bolt 112. The cover 122 has an inlet 119 therein. As mentioned above, the fluid is fed from the tank 40 via the solenoid vale 36, the backwashing filter 37 and the solenoid valves 38 and 41, and then enters at the inlet 119 into a void 124 defined by the case 116 and the cover 122. A flow rate of the fluid is regulated so that a very small amount of the fluid can flow out of the void 124 through an outlet 121 and a guide hole 117, both of which are formed in the case 116, preventing the ingress of the powder-containing fluid into the void 124. Therefore, in particularly, powder does not adhere to the rolling elements used in rollers.

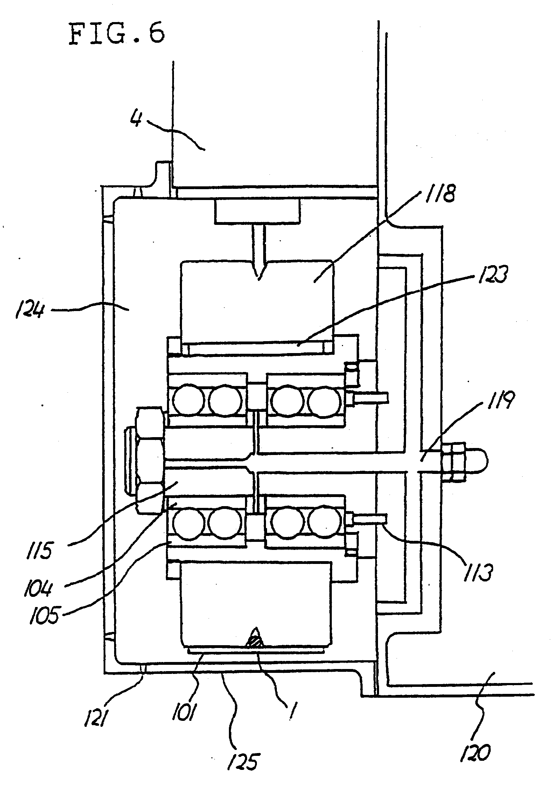

FIG. 6 shows another embodiment of the wire take-up device. Similar elements are labelled with similar reference numerals as used in FIG. 5 and their explanations will not be repeated.

In the illustrated embodiment, a pulley 118 is provided on the outside of the outer ring 105 by means of a key 123. The pulley 118 has a V-shaped groove to guide the wire 1. A cover 125, which covers a number of rollers 103, is attached to the arm 120 and to the lower guide assembly 4. The fluid, which is fed via the valve 41, passes through an appropriate feed pipe inside the arm 120 and is introduced through the inlet 119 to the void 124 defined by the cover 125.

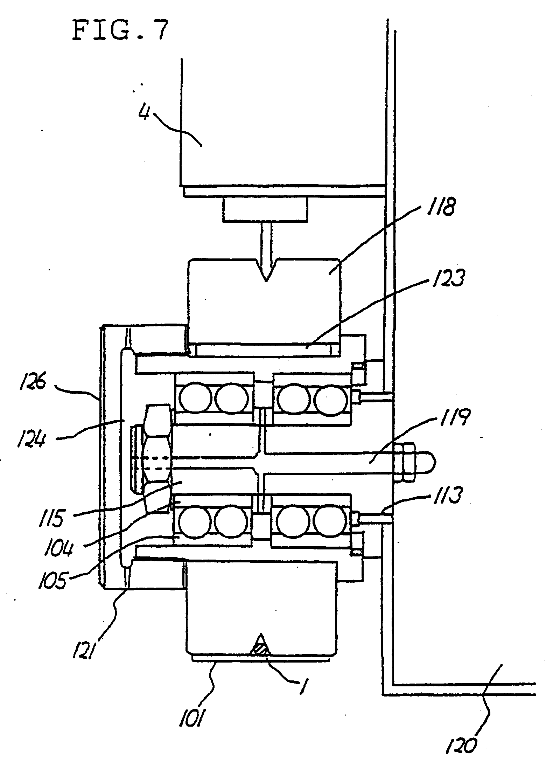

FIG. 7 is a cross-sectional view illustrating yet another example of a wire take-up device.

In the illustrated embodiment, a cover 126 is attached to the arm 120 and covers each roller 103 individually.

It is not intended to be exhaustive or to limit the invention to the precise form disclosed, and obviously many modifications and variations are possible in the light of the above teaching. The scope of the invention is defined by the claims appended hereto.

## Claims

1. An electric discharge machining apparatus using a tool electrode (1) for machining a workpiece (2) by means of electric discharges by applying voltage across a machining gap formed between the tool electrode and the workpiece and filled with dielectric fluid, characterised by;
a storage tank (40) for storing a first fluid (8);
a storage tank (20) for storing a second fluid (7);
a covering means, (46, 54, 66, 116, 122, 125) covering a member to be protected against said first fluid; and
a fluid supply device (6) for introducing a second fluid (7) to the inside of said covering means while supplying said first fluid (8) to the machining gap.

2. An electric discharge machining apparatus as claimed in Claim 1, wherein said tool electrode (1) includes a travelling wire.

3. An electric discharge machining apparatus as claimed in Claim 2, wherein said covering means includes a housing (54) for housing a current pickup (60) for delivering machining current to said travelling wire and a wire guide (51) for defining the position of said travelling wire relative to said workpiece.

4. An electric discharge machining apparatus as claimed in Claim 2, wherein said covering means includes a cover member for covering a movable member (46) which is provided along a transport path of said travelling wire.

5. A method of using an apparatus as claimed in any of the preceding claims, wherein a first fluid (8) containing a powdery substance is stored in the storage tank, and supplied to the machining gap, and a second fluid (7) which does not contain any of the powdery substance, is introduced to the inside of the covering means.

## Patentansprüche

1. Elektroerosionsbearbeitungsvorrichtung mit einer Werkzeugelektrode (1) zur Bearbeitung eines Werkstücks (2) mittels elektrischer Entladung durch Anlegen einer Spannung über einen Bearbeitungsspalt, der zwischen der Werkzeugelektrode und dem Werkstück gebildet und mit einem dielektrischen Fluid gefüllt ist,
**gekennzeichnet durch**
einen Vorratsbehälter (40) zur Aufbewahrung eines ersten Fluids (8);
einen Vorratsbehälter (20) zur Aufbewahrung eines zweiten Fluids (7);
eine Abdeckeinrichtung (46, 54, 66, 116, 122, 125) zur Abdeckung eines gegen das erste Fluid zu schützenden Elements; und
eine Fluidversorgungseinrichtung (6) zur Einleitung eines zweiten Fluids (7) zum Inneren der Abdeckeinrichtung während der Zufuhr des ersten Fluids (8) zum Bearbeitungsspalt.

2. Elektroerosionsbearbeitungsvorrichtung nach Anspruch 1, bei der die Werkzeugelektrode (1) einen beweglichen Draht enthält.

3. Elektroerosionsbearbeitungsvorrichtung nach Anspruch 2, bei der die Abdeckeinrichtung ein Gehäuse (54) zur Aufnahme eines Stromabnehmers (60) für die Zufuhr eines Bearbeitungsstroms zu dem beweglichen Draht und eine Drahtführung (51) zur Festlegung der Position des beweglichen Drahts relativ zum Werkstück enthält.

4. Elektroerosionsbearbeitungsvorrichtung nach Anspruch 2, bei der die Abdeckeinrichtung ein Abdeckelement zur Abdeckung eines beweglichen Teils (46) enthält, das entlang eines Transportweges des beweglichen Drahts vorgesehen ist.

5. Verfahren zur Verwendung einer Vorrichtung nach einem der vorhergehenden Ansprüche, bei dem ein eine Pulversubstanz enthaltendes erstes Fluid (8) in dem Vorratsbehälter aufbewahrt und zum Bearbeitungsspalt gefördert wird, und bei dem eine zweites Fluid (7), das keine Pulversubstanz enthält, in das Innere der Abdeckeinrichtung eingeleitet wird.

## Revendications

1. Appareil d'usinage par étincelage utilisant une électrode outil (1) pour l'usinage d'une pièce (2) au moyen de décharges électriques par application d'une tension à un intervalle d'usinage formé entre l'électrode outil et la pièce et rempli d'un fluide diélectrique, caractérisé par
un réservoir (40) pour un premier fluide (8),
un réservoir (20) pour un deuxième fluide (7),
un moyen de couverture (46, 54, 66, 116, 122, 125) couvrant un élément à protéger contre le premier fluide, et
un dispositif d'alimentation en fluide (6) pour l'introduction du deuxième fluide (7) dans le moyen de couverture en même temps que l'envoi du premier fluide (8) à l'intervalle d'usinage.

2. Appareil d'usinage par étincelage selon la revendication 1, dans lequel l'électrode outil (1) comporte un fil défilant.

3. Appareil d'usinage par étincelage selon la revendication 2, dans lequel le moyen de couverture comporte une boîte (54) renfermant une prise de courant (60) pour l'amenée de courant d'usinage au fil défilant et un guide-fil (51) pour la détermination de la position du fil défilant par rapport à la pièce.

4. Appareil d'usinage par étincelage selon la revendication 2, dans lequel le moyen de couverture comporte un élément de couverture d'un élément mobile (46) qui est prévu sur le trajet du fil défilant.

5. Procédé d'utilisation d'un appareil selon l'une des revendications précédentes, dans lequel un premier fluide (8) contenant une substance en poudre est emmagasiné dans le réservoir et envoyé à l'intervalle d'usinage et un deuxième fluide (7) qui ne contient pas de substance en poudre est introduit dans le moyen de couverture.
